# EUROPEAN PATENT APPLICATION

(11) **EP 4 129 905 A1**
(43) Date of publication of application: **08.02.2023**
(21) Application number: 21189095.9
(22) Date of filing: 02.08.2021
(51) Int. Cl.: C01C 1/04

(54) **GAS PRODUCTION PLANT**

(71) Applicant: Siemens Gamesa Renewable Energy A/S, 7330 Brande (DK)
(72) Inventor: Kayaalp, Bugra, 20535 Hamburg (DE); Madsen, Finn Daugaard, 7190 (DK)
(74) Representative: SGRE-Association

(57) **Abstract**

The invention describes a gas production plant (10) comprising an electrolysis arrangement (10H) for the production of gaseous hydrogen (H₂); an air separation arrangement (10N) for the production of gaseous nitrogen (N₂); a gas mixer (101) configured to mix the gaseous hydrogen (H₂) and the gaseous nitrogen (N₂) in a predetermined mixing ratio; and an injection means (103) for injecting the resulting gaseous mixture (M) into an export pipeline (12). The invention further describes a method of providing gaseous reactants (H₂, N₂) for an ammonia synthesis plant (11).

## Description

### Background

Ammonia is widely used for many purposes, for example as a fertilizer, as a fuel, and as a precursor in the manufacture of various compounds such as pharmaceutical products, cleaning products, etc. Since ammonia does not occur naturally in any significant amounts, it is generally manufactured by large-scale synthesis, most commonly using the Haber-Bosch process. This process combines the reactants hydrogen and nitrogen at a suitable temperature and pressure to obtain ammonia.

Nitrogen for the Haber-Bosch process can be extracted from air with relatively low effort. However, hydrogen required for ammonia synthesis is mostly produced by steam methane reforming, in which natural gas is reformed to produce hydrogen in gaseous form (H₂). This precursor stage of ammonia production is energy-intensive, and a further disadvantage of steam methane reforming is that large quantities of greenhouse gases such as carbon dioxide and carbon monoxide are released as by-products into the atmosphere.

In an alternative to steam reforming, hydrogen can be obtained from electrolysis of water. Developments in wind energy have led to the implementation of wind turbines to drive electrolysis plants. Wind farms suitable for large-scale hydrogen production are generally located offshore, so that the hydrogen gas must be transported to the ammonia production plant. However, hydrogen gas is highly combustible, and great care must be taken to ensure safety at all stages of the gas pipeline from the offshore wind plant to the ammonia production plant. Generally, hydrogen gas must be transported in a pipeline made from high-purity stainless steel. Furthermore, gaseous hydrogen can cause embrittlement in the material of a steel pipeline, leading to corrosion damage which can ultimately develop into leaks.

The costs of such a pipeline between an offshore wind plant to an ammonia production plant (generally on the mainland) are therefore very high.

It is therefore an object of the invention to provide a more economical way of transporting reactant gases to an ammonia synthesis plant.

This object is achieved by the claimed gas production plant, the claimed ammonia production arrangement, and the claimed method of providing gaseous reactants for an ammonia synthesis plant.

### Description

According to the invention, the gas production plant comprises at least an electrolysis arrangement for the production of gaseous hydrogen H₂; an air separation arrangement for the production of gaseous nitrogen N₂; a gas mixer configured to mix the gaseous hydrogen and the gaseous nitrogen in a predetermined mixing ratio; and an injection means for injecting the resulting gaseous mixture into an export pipeline for transport to a remote ammonia synthesis plant, or to a facility such as a pressurized vessel, a salt cave etc., for temporary storage.

The inventive gas production plant delivers precursor gases for a later production stage, and may also be referred to as a precursor gas delivery plant. An advantage of the inventive gas production plant is that it avoids the difficulties associated with transporting highly combustible gaseous hydrogen in its pure form. By avoiding the need to transport pure hydrogen, significant cost savings can be achieved. The invention is based on the insight that the inert nitrogen gas, when mixed with gaseous hydrogen, results in a significantly less combustible gas mixture. Nitrogen acts as an inhibitor gas, leading to lower hydrogen adsorption on the pipeline material. This means that embrittlement is not a significant issue for a pipeline transporting the proposed gas mixture. The inclusion of nitrogen effectively reduces corrosion of the pipeline material and can favourably extend the lifetime of a relatively economical steel pipeline, i.e. a steel pipeline that does not need expensive coatings or liners to protect the interior surfaces from corrosion. Therefore, by choosing a suitable mixing ratio and mixing the gaseous hydrogen and nitrogen prior to transport by pipeline, a stable gas mixture can be achieved that can be transported in a relatively economical pipeline. An export pipeline may be many kilometres in length, and the accrued cost savings can be very high.

According to the invention, the ammonia production arrangement comprises such a gas production plant for supplying a gaseous mixture of hydrogen and nitrogen; an ammonia synthesis plant configured to synthesize ammonia from the gaseous mixture; and a pipeline connecting the gas production plant and the ammonia synthesis plant. As explained above, the structural requirements for the pipeline can be favourably relaxed compared to a hydrogen transport pipeline, leading to significant cost savings, particularly if the gas production plant is at a remote distance from the ammonia synthesis plant.

According to the invention, the method comprises at least the steps of: performing electrolysis to obtain gaseous hydrogen; performing air separation to obtain gaseous nitrogen; mixing the gaseous hydrogen and the gaseous nitrogen in a predetermined mixing ratio; injecting the resulting gaseous mixture into a pipeline; and transporting the gaseous mixture in the pipeline to the ammonia synthesis plant.

Particularly advantageous embodiments and features of the invention are given by the dependent claims, as revealed in the following description. Features of different claim categories may be combined as appropriate to give further embodiments not described herein.

The gaseous hydrogen can be obtained by any suitable electrolysis arrangement. In the following, without restricting the invention in any way, it may be assumed that the electrolysis arrangement is realised to perform water electrolysis, for example using purified seawater.

The gaseous nitrogen can be obtained by any suitable air separation arrangement, for example a pressure swing adsorption arrangement, a cryogenic distillation arrangement, a pressurised reverse osmosis membrane arrangement, etc.

In the Haber-Bosch process, ammonia is synthesized from a pressurized mixture of H₂ and N₂ according to the chemical reaction

**N₂+3H₂ → 2NH₃**

Therefore, in a particularly preferred embodiment of the invention, the gas mixer is configured to mix H₂ and N₂ in a mixing ratio that is tailored to the Haber-Bosch process. The gas mixer is therefore preferably configured to combine the H₂ and N₂ gases at the stoichiometric ratio of 3:1, i.e. the resulting mixture comprises three parts gaseous hydrogen H₂ to one part gaseous nitrogen N₂.

The electrolysis arrangement and air separation arrangement can be driven by any suitable energy supply. However, since the aim of the invention is to contribute to the synthesis of "green" ammonia - i.e. synthetic ammonia with a minimized carbon footprint - at least one of the electrolysis arrangement and the air separation arrangement are powered by a renewable energy plant such as a solar energy plant, a wind energy plant, a tidal energy plant, a hydroelectric energy plant, etc. Preferably, in the inventive precursor gas delivery plant, both electrolysis arrangement and air separation arrangement are powered by a renewable energy plant. A combination of renewable energy plants can be implemented, for example a wind turbine to supply electricity to the electrolysis arrangement, and a photovoltaic plant to supply electricity for the air separation arrangement. Generally, water electrolysis is more energy intensive than air separation.

In the following, without restricting the invention in any way, it may be assumed that at least the electrolysis arrangement of the inventive precursor gas delivery plant is powered by a wind energy plant comprising one or more wind turbines. In the following, it may be assumed that a wind energy plant is a wind farm, for example an offshore wind farm. A photovoltaic plant may be realised in the immediate vicinity of the wind farm.

In addition to providing power for gas production, the wind energy plant can provide electricity to drive various other components. For example, in a preferred embodiment of the invention, the mixing step is preceded by a gas purification step, and a wind energy plant can provide power to a hydrogen purifier and a nitrogen purifier. Similarly, a wind energy plant can provide electricity to drive a gas mixer.

Preferably, the gas mixture is pressurized prior to injecting the mixture into the pipeline. For example, a compressor can pressurize the gas mixture to the order of 10⁶ - 10⁷ Pa.

The pressurized mixture of gaseous hydrogen and gaseous nitrogen is less combustible than pure hydrogen, so that the pipeline can be realised in a more economical manner compared to a hydrogen pipeline. In a further preferred embodiment of the invention, the pipeline connecting the gas production plant and the ammonia synthesis plant can be realised using spoolable reinforced thermoplastic piping (RTP) or flexible composite pipe (FCP). This allows for a more economical realisation, particularly when a long subsea export pipeline is required to link an offshore wind farm to an ammonia synthesis plant. Such a spoolable plastic pipeline can be laid in a relatively economical manner, for example by unspooling the pipe from the deck of a ship, and deploying a subsea plough to arrange the pipe at the level of the seabed.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows an embodiment of the inventive ammonia production arrangement;
Figure 2 is a flowchart illustrating the inventive method.

In the diagrams, like numbers refer to like objects throughout. Objects in the diagrams are not necessarily drawn to scale.

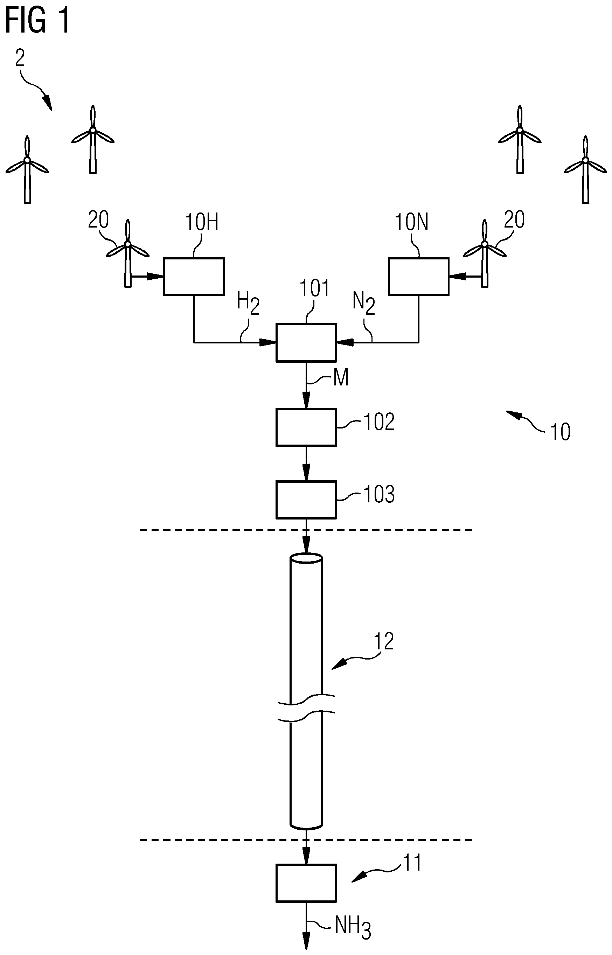

Figure 1 is a simplified schematic showing a possible realisation of the inventive ammonia production arrangement 1 using an embodiment of the inventive precursor gas delivery plant. The entire configuration may be divided roughly into three stages (as indicated here by the dotted lines) namely gas delivery 10, ammonia production 11, and a pipeline link 12.

In this exemplary embodiment, an offshore wind farm 2 is used to power water electrolysis plants 10H and air separation plants ION. Here, various wind turbines 20 provide power to water electrolysis modules 10H to obtain gaseous hydrogen H₂. Other wind turbines 20 provide power to air separation modules ION to obtain gaseous nitrogen N₂.

The diagram shows one electrolysis module 10H and one air separation module 10N for clarity, but it shall be understood that each wind turbine 20 could drive an electrolysis module 10H and/or an air separation module ION. Equally, any one of these modules 10H, 10N can be powered by more than one wind turbine 20.

An electrolysis module 10H and/or air separation module 10N in combination with its source of power is referred to as a gas production plant 10. Of course, an electrolysis module 10H or air separation module 10N could be powered by any suitable source of electricity.

For example, wind energy may be used to drive water electrolysis to produce H₂, while photovoltaic modules can be used to drive air separation to produce N₂. In an exemplary realisation, a photovoltaic unit can be installed directly on (or in the immediate vicinity of) a wind turbine 20, so that each wind turbine installation comprises a water electrolysis arrangement 10H powered by the wind turbine 20, and an air separation unit 10N powered by the photovoltaic unit. In this way, hydrogen and nitrogen production are close together, allowing the gases to be mixed essentially directly in the desired ratio for the export pipeline 12, without having to transport the gases separately over any significant distance.

The gaseous hydrogen H₂ and the gaseous nitrogen N₂ are combined by a gas mixer 101 in a predetermined stoichiometric ratio, preferably at a ratio of 3:1 (three parts gaseous hydrogen H₂ to one part gaseous nitrogen N₂). Prior to mixing, each gas can be purified by a suitable purification arrangement, as will be known to the skilled person.

The stoichiometric gaseous mixture M is compressed to a pressure of up to 10 MPa using a suitable compressor 102, and an injection means 103 subsequently injects the pressurized mixture M into an export pipeline 12.

The pressurized mixture M is transported to an ammonia synthesis plant 11 (indicated here simply as a process stage), which may be located at a remote location, for example on the mainland or near the shore. As will be known to the skilled person, the ammonia synthesis plant 11 can directly apply the Haber-Bosch process to synthesize ammonia from the pressurized 3:1 mixture of H₂ and N₂.

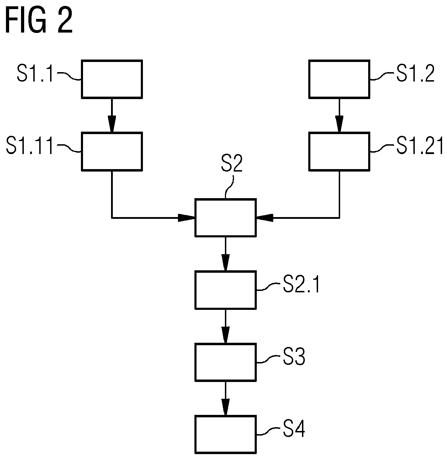

Figure 2 is an exemplary flowchart to illustrate steps of the inventive method of providing gaseous reactants H₂, N₂ for an ammonia synthesis plant. The method comprises an initial step S1.1 of performing electrolysis to obtain gaseous hydrogen H₂, and an initial step S1.2 of performing air separation to obtain gaseous nitrogen N₂. The gaseous hydrogen is purified in step S1.11, and the gaseous nitrogen is purified in step S1.21. The purified reactants are then mixed in a subsequent step S2 according to a predetermined mixing ratio, for example a stoichiometric ratio suitable for a subsequent Haber-Bosch process as described above. The gas mixture is then pressurized to a suitable pressure in step S2.1. In step S3, the pressurized gas mixture M is then injected into an export pipeline, and transported in step S4 to the ammonia synthesis plant (or to a storage facility).

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A gas production plant (10) comprising
- an electrolysis arrangement (10H) for the production of gaseous hydrogen (H₂);
- an air separation arrangement (ION) for the production of gaseous nitrogen (N₂);
- a gas mixer (101) configured to mix the gaseous hydrogen (H₂) and the gaseous nitrogen (N₂) in a predetermined mixing ratio; and
- an injection means (103) for injecting the resulting gaseous mixture (M) into an export pipeline (12).

2. A gas production plant according to the preceding claim, wherein the gas mixer (101) is configured to mix the gaseous hydrogen and the gaseous nitrogen in a mixing ratio of three parts gaseous hydrogen to one part gaseous nitrogen.

3. A gas production plant according to any of the preceding claims, wherein the electrolysis arrangement (10H) is configured to perform water electrolysis.

4. A gas production plant according to any of the preceding claims, wherein the air separation arrangement (ION) is configured as any of: a pressure swing adsorption arrangement, a cryogenic distillation arrangement, a pressurised reverse osmosis membrane arrangement.

5. A gas production plant according to any of the preceding claims, wherein the electrolysis arrangement (10H) is powered by a wind energy plant (2).

6. A gas production plant according to any of the preceding claims, wherein the air separation arrangement (ION) is powered by a wind energy plant (2).

7. A gas production plant according to claim 5 or claim 6, wherein a wind energy plant (2) comprises one or more offshore wind turbines (20).

8. An ammonia production arrangement (1) comprising
- a gas production plant (10) according to any of claims 1 to 7 for supplying a gaseous mixture (M) of hydrogen (H₂) and nitrogen (N₂);
- an ammonia synthesis plant (11) configured to synthesize ammonia (NH₃) from the gaseous mixture (M); and
- an export pipeline (12) connecting the gas production plant (10) and the ammonia synthesis plant (11).

9. An ammonia production arrangement according to the preceding claim, wherein the export pipeline (12) is made from a thermoplastic material.

10. A method of providing gaseous reactants (H₂, N₂) for an ammonia synthesis plant (11), which method comprises the steps of
S1.1) performing electrolysis to obtain gaseous hydrogen (H₂) ;
S1.2) performing air separation to obtain gaseous nitrogen (N₂);
S2) mixing the gaseous hydrogen and the gaseous nitrogen in a predetermined mixing ratio;
S3) injecting the resulting gaseous mixture (M) into an export pipeline (12); and
S4) transporting the gaseous mixture (M) in the export pipeline (12) to the ammonia synthesis plant (11).

11. A method according to the preceding claim, wherein the mixing step (S2) is preceded by a gas purification step (S1.11, S1.21).

12. A method according to any of claims 10 or 11, comprising a step (S2.1) of compressing the gaseous mixture (M) prior to injection into the export pipeline (12).
